# EUROPEAN PATENT APPLICATION

(11) **EP 3 064 789 A1**
(43) Date of publication of application: **07.09.2016**
(21) Application number: 14859228.0
(22) Date of filing: 23.10.2014
(51) Int. Cl.: F16C 11/04, F16C 17/02, F16C 25/04

(54) **HINGE DEVICE**

(30) Priority: 01.11.2013 JP 2013228530
(71) Applicant: Sugatsune Kogyo Co. Ltd., Tokyo 101-8633 (JP)
(72) Inventor: SUGASAWARA, Jun, Tokyo 101-8633 (JP); OSHIMA, Kazuyoshi, Tokyo 101-8633 (JP); SHINMURA, Ken, Tokyo 101-8633 (JP)
(74) Representative: Zoli, Filippo
(86) International application number: PCT/JP2014/078179
(87) International publication number: WO 2015/064460

(57) **Abstract**

Provided is a novel hinge device that can cause a large change in friction force. The hinge device of the present invention is provided with: a shaft 1; an end-less annular bearing 4 into which the shaft 1 is inserted and that has, alternating in a circumferential direction, a contact section 4a contacting the shaft 1 and a non-contact section 4b having a gap with respect to the shaft 1; a housing 2 that limits the rotation of the bearing such that the shaft 1 rotates relative to the bearing 4; and force imparting sections 5, 6 that impart force such that the bearing 4 deforms.

## Description

### TECHNICAL FIELD

The present invention pertains to a hinge device configured so as to generate a friction force between a rotating shaft and a bearing which supports the shaft.

### BACKGROUND ART

Hinge devices which generate a friction force between a rotating shaft and a bearing which supports the shaft are known. A friction force acts between the shaft and the bearing because the shaft is press fit into the bearing, and the bearing compresses the shaft. The magnitude of the friction force is proportional to the pressure with which the bearing compresses the shaft. When the shaft is rotated, torque attributed to friction force works on the shaft. This type of hinge device is capable of uniformly maintaining an opening angle of a rotating body through friction force, and therefore, for example, the hinge device is used for uniformly maintaining an opening angle of a display device for a notebook computer, and for uniformly maintaining an opening angle of a flap door.

As a typical hinge device, patent document 1 discloses, as shown in FIG. 39, a hinge device provided with a shaft 101, a retaining member 102 for rotatably retaining the shaft 101, and a spring 103 for biasing in a direction which reduces a gap of the retaining member 102. The retaining member 102 is provided with a tube part 102a configured so as to wrap around the shaft 101, and a pair of flange parts 102b integrally formed at both end parts in the circumferential direction of the tube part 102a. When the spring 103 reduces the gap between the pair of flange parts 102b, the tube part 102a tightens on the shaft 101, and friction force is generated between the shaft 101 and the tube part 102a.

As another typical hinge device, patent document 2 discloses, as shown in FIG. 40, a hinge device provided with a shaft 105, a plurality of annular bearings 106 through which the shaft 105 is inserted, and a housing 107 for limiting the rotation of the bearings 106. The shaft 105 is press fit into the bearings 106, and friction force works between the shaft 105 and the inner circumferential surface of the bearings 106.

### PRIOR ART DOCUMENTS

### Patent Documents

Patent Document 1: Japanese Utility Model Registration No. 2568286
Patent Document 2: Japanese Utility Model Registration No. 3071600

### SUMMARY OF THE INVENTION

### Problem to be Solved by the Invention

The hinge device described by patent document 1 changes the strength of the spring, and thereby changes the pressure at which the retaining member is tightened on the shaft, and as a result, the friction force working between the retaining member and the shaft changes. The hinge device described by patent document 2 changes the friction force that works between the shaft and the bearings by increasing or decreasing the number of bearings that are layered. However, a problem with both types of hinge devices is that the friction force cannot be significantly varied, and this problem is attributed to the principles used for changing the friction force.

Therefore, an object of the present invention is to provide a novel hinge device capable of greatly changing the friction force using a principle for changing the friction force that differs from the principles used by conventional hinge devices.

### MEANS FOR SOLVING THE INVENTION

In order to resolve the abovementioned issue, one aspect of the present invention is a hinge device provided with a shaft; an end-less annular bearing into which the shaft is inserted, and which has, alternating in a circumferential direction, a contact section contacting the shaft and a non-contact section having a gap with respect to the shaft; a housing for limiting the rotation of the bearing such that the shaft rotates relative to the bearing; and a force imparting section for imparting a force on the bearing such that the bearing deforms.

### EFFECT OF THE INVENTION

The present invention uses deformation of the end-less annular bearing having, alternating in a circumferential direction, a contact section and a non-contact section, to change the friction force between the shaft and the bearing. Therefore, the friction force of the contact section of the bearing can be greatly varied.

### BRIEF DESCRIPTION OF THE DRAWINGS

FIG. 1 is an exterior perspective view of a torque adjusting type hinge device of a first embodiment of the present invention.
FIG. 2 is an exploded perspective view of the hinge device of FIG. 1.
FIG. 3 is a cross-sectional view orthogonal to the center line of the shaft of the hinge device of FIG. 1.
FIG. 4 is an elevation view of a bearing.
FIG. 5 is an image showing deformation of the bearing. (FIG. 5(a) shows a state with an adjustment screw loosened, and FIG. 5(b) shows a state with the adjustment screw tightened.)
FIG. 6 is an image showing another example of a torque adjusting type hinge device of the first embodiment of the present invention. (FIG. 6(a) shows a state with an adjustment screw loosened, and FIG. 6(b) shows a state with the adjustment screw tightened.)
FIG. 7 is an image showing yet another example of a torque adjusting type hinge device of the first embodiment of the present invention. (FIG. 7(a) shows a state with an adjustment screw loosened, and FIG. 7(b) shows a state with the adjustment screw tightened.)
FIG. 8 is an image showing yet another example of a torque adjusting type hinge device of the first embodiment of the present invention. (FIG. 8(a) shows a state with an adjustment screw loosened, and FIG. 8(b) shows a state with the adjustment screw tightened.)
FIG. 9 is an exploded perspective view of a one-way type torque hinge device of a second embodiment of the present invention.
FIG. 10 is an operation diagram of the one-way type torque hinge device of the second embodiment of the present invention.
FIG. 11 is an enlarged view of part X of FIG. 10.
FIG. 12 is a graph showing the relationship between the shaft angle and the torque generated at the shaft.
FIG. 13 is an exploded perspective view showing another example of a one-way type torque hinge device of the second embodiment of the present invention.
FIG. 14 is an elevation view of the one-way type hinge device of FIG. 13.
FIG. 15 is an exploded perspective view showing yet another example of a one-way type torque hinge device of the second embodiment of the present invention.
FIG. 16 is an operation diagram of the one-way type torque hinge device of FIG. 15.
FIG. 17 is a graph showing the relationship between the shaft angle and the torque generated at the shaft for the one-way type torque hinge device of FIG. 15.
FIG. 18 is an exploded perspective view showing yet another example of a one-way type torque hinge device of the second embodiment of the present invention.
FIG. 19 is an operation diagram of the one-way type torque hinge device of FIG. 18.
FIG. 20 is an enlarged view of part XIX of FIG. 19.
FIG. 21 is an operation diagram of yet another example of a one-way type torque hinge device of the second embodiment of the present invention.
FIG. 22 is a graph showing the relationship between the shaft angle and the torque generated at the shaft for the one-way type torque hinge device of FIG. 21.
FIG. 23 is an operation diagram of yet another example of a one-way type torque hinge device of the second embodiment of the present invention.
FIG. 24 is an exploded perspective view of a static ≧ dynamic torque type hinge device of a third embodiment of the present invention.
FIG. 25 is an operation diagram of the static ≧ dynamic torque type hinge device of FIG. 24.
FIG. 26 is an enlarged view of part XXV of FIG. 25.
FIG. 27 is a graph showing the relationship between the shaft angle and the torque generated at the shaft for the static ≧ dynamic torque type hinge device of FIG. 24.
FIG. 28 is an image showing an example with an annular plate added as an annular member to the static ≧ dynamic torque type hinge device of FIG. 24.
FIG. 29 is an exploded perspective view showing yet another example of a static ≧ dynamic torque type hinge device of the third embodiment of the present invention.
FIG. 30 is a cross-sectional view of the static ≧ dynamic torque type hinge device of FIG. 29.
FIG. 31 is an enlarged view of part XXX of FIG. 30.
FIG. 32 is an exploded perspective view showing yet another example of a static ≧ dynamic torque type hinge device of the third embodiment of the present invention.
FIG. 33 is an operation diagram of the static ≧ dynamic torque type hinge device of FIG. 32.
FIG. 34 is an enlarged view of part XXXIII of FIG. 33.
FIG. 35 is a perspective view showing an example of the hinge device of the present embodiment incorporated into a television stand.
FIG. 36 is a perspective view showing an example of the hinge device of the present embodiment incorporated into a stay of a horizontally opening flap door.
FIG. 37 is a perspective view showing an example of the hinge device of the present embodiment incorporated into a stay of an upwardly opening flap door.
FIG. 38 is a perspective view showing an example of the hinge device of the present embodiment incorporated into a hinge of a hinged door.
FIG. 39 is a cross-sectional view of a conventional hinge device.

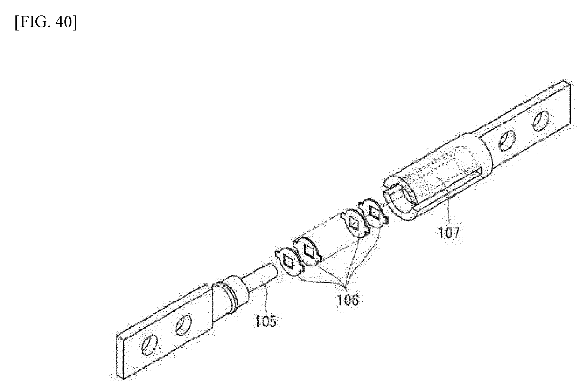

FIG. 40 is a perspective view of a conventional hinge device.

### MODE FOR CARRYING OUT THE INVENTION

Embodiments of the hinge device of the present invention are described below based on the attached drawings. As described above, the present invention uses deformation of an end-less annular bearing to change the friction force. By using this principle, a torque hinge device capable of enlarging the torque adjustment range (hereinafter, referred to as a torque adjusting type hinge device), a hinge device capable of enlarging the torque when the shaft is rotated in one direction (clockwise direction) such that it is larger than the torque when the shaft is rotated in the other direction (counterclockwise direction) (hereinafter, referred to as a one-way type torque hinge device), and a hinge device capable of enlarging the holding torque when the shaft is stopped such that it is larger than the torque when the shaft is rotating (hereinafter, referred to as a static ≧ dynamic torque type hinge device) can be realized. The torque adjusting type hinge device, one-way type torque hinge device, and static ≧ dynamic torque type hinge device of the embodiments of the present invention are described in order below.

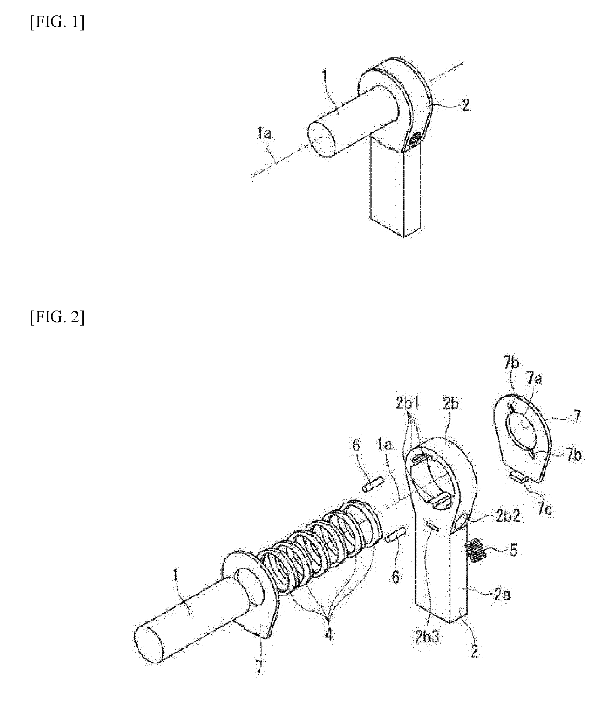

FIG. 1 shows an exterior perspective view of a torque adjusting type hinge device of a first embodiment of the present invention. This hinge device is provided with a shaft 1, and a housing 2 rotatably supporting the shaft 1. The shaft 1 is capable of rotating around a center line 1a thereof relative to the housing 2. Note that the rotation of the shaft 1 with respect to the housing 2 is relative, and rotation of the shaft 1 may occur, rotation of the housing 2 may occur, and rotation of the shaft 1 and the housing 2 may occur. Hereinafter, for convenience of the description, the present invention is described with the assumption that the shaft 1 rotates, and the housing 2 is fixed.

FIG. 2 shows an exploded perspective view of the hinge device of FIG. 1. The housing 2 is formed like a wrench, and is provided with a base part 2a having a quadrilateral profile, and an annular housing body 2b at the tip end of the base part 2a. The shaft 1 pierces the housing body 2b. A plurality of projections 2b1 extending in the center line 1a direction is formed on the inner circumferential surface of the housing body 2b. These projections 2b1 limit relative rotation of bearings 4 with respect to the housing body 2b. A female threaded part 2b2 is machined in the radial direction in the housing body 2b. An adjustment screw 5 is screwed, as a position adjustment part, into the female threaded part 2b2. The position of the adjustment screw 5 in the radial direction can be adjusted.

Multiple bearings 4 are layered and accommodated inside the housing body 2b. The detailed shape of the bearing 4 is described later. The shaft 1 is press fit into the bearings 4. The profile of the shaft 1 is circular. The shaft 1 may be solid or hollow. When the shaft 1 is press fit into the bearings 4, pressure works between the shaft 1 and the bearings 4 and friction force proportional to this pressure then works between the shaft 1 and the bearings 4. Note that the number of bearings 4 is not particularly limited, and is determined, as appropriate, according to the required torque. The number of bearings 4 can also be one.

A pair of rods 6 is provided as a force imparting section between the housing body 2b and the bearings 4 at positions separated 180 degrees in the circumferential direction. The rod 6 is a cylindrical body having a smaller diameter than the shaft 1. The rod 6 is parallel to the shaft 1, and contacts the plurality of bearings 4. A pair of annular retention plates 7 is attached as retaining members to both end surfaces of the housing body 2b in the center line 1a direction. A protruding piece 7c of the retention plate 7 is inserted into a slit 2b3 of the housing body 2b to thereby attach the retention plate 7 to the housing 2. A hole 7a penetrated by the shaft 1 is opened in the retention plate 7. A groove 7b extending in the radial direction is formed at the surface of the retention plate 7 on the housing side. The groove 7b leads to the hole 7a at the center of the retention plate 7. The end of the rod 6 is inserted into the groove 7b of the retention plate 7. Movement of the rod 6 towards the bearings 4 is guided by the groove 7b of the retention plate 7.

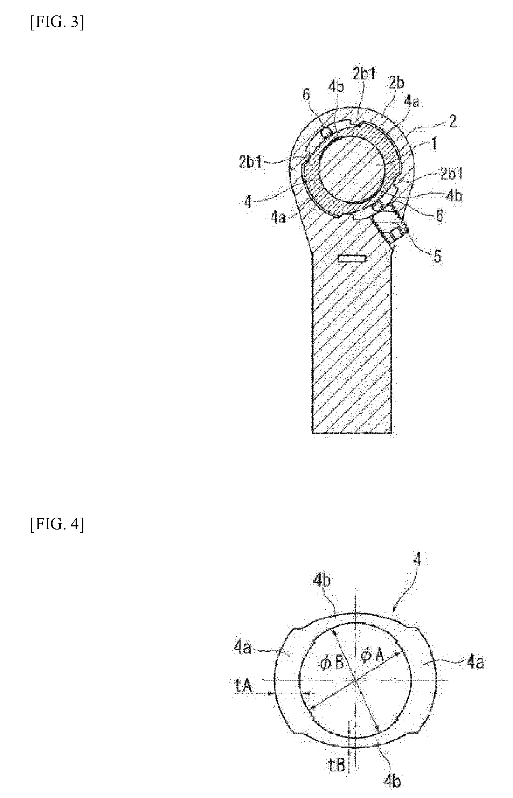

FIG. 3 is a cross-sectional view orthogonal to the center line 1a of the shaft of the hinge device of FIG. 1. The bearing 4 has, alternating in a circumferential direction, a contact section 4a contacting the shaft 1 and a non-contact section 4b having a gap with respect to the shaft 1. With this embodiment, two contact sections 4a and two non-contact sections 4b are formed. The contact sections 4a are mutually facing, arranged at positions separated 180 degrees in the circumferential direction. The non-contact sections 4b are also mutually facing, arranged at positions separated 180 degrees in the circumferential direction. The shaft 1 is held by the pair of opposing contact sections 4a. The external form of the contact section 4a is formed in an arc having a radius that is smaller than that of the inner circumference of the housing body 2b. A gap is opened between the contact section 4a and the housing body 2b. Both ends parts in the circumferential direction of the contact section 4a engage with the projections 2b 1 of the housing body 2b, and stop the rotation of the bearing 4. The external form of the non-contact section 4b is formed in an arc that is smaller than the external form of the contact section 4a. The gap between the non-contact section 4b and the housing body 2b is formed so as to narrow towards both end parts of the non-contact section 4b in the circumferential direction such that the rod 6 does not move in the circumferential direction.

The pair of rods 6 is arranged between the outside of the non-contact section 4b of the bearing 4 and the inside of the housing body 2b. One of the rods 6 is interposed between the bearing 4 and the adjustment screw 5. When the adjustment screw 5 is tightened, the one rod 6 pushes the non-contact section 4b. At the same time that the one rod 6 pushes the non-contact section 4b, the other rod 6 pushes the non-contact section 4b with a counteracting force.

FIG. 4 shows an elevation view of the bearing. The bearing 4 is formed from a thin plate made of metal. An inner diameter ϕA of the pair of contact sections 4a is smaller than the outer diameter of the shaft 1. An inner diameter ϕB of the pair of non-contact sections 4b is larger than the outer diameter of the shaft 1. A thickness tB in the radial direction of the non-contact section 4b is thinner than a thickness tA in the radial direction of the contact section 4a. Therefore, the non-contact section 4b deforms more easily than the contact section 4a.

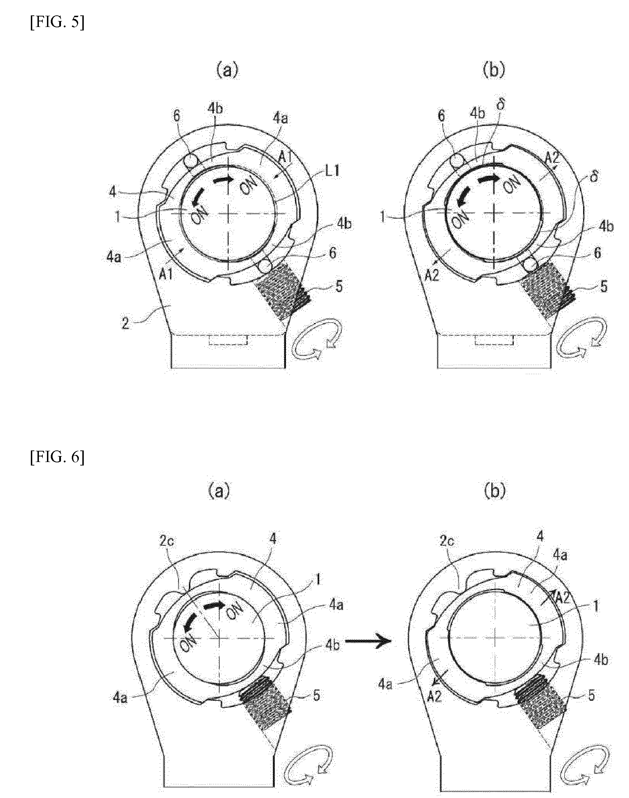

Deformation of the bearing 4 is described below. FIG. 5(a) shows a state in which the adjustment screw 5 is loosened, and FIG. 5(b) shows a state with the adjustment screw 5 tightened. In FIG. 5(a), because the adjustment screw 5 is loosened, the rod 6 is not pushing on the non-contact section 4b of the bearing 4. The dotted line L1 of FIG. 5(a) shows the external form of the shaft 1. The outer diameter of the shaft 1 is larger than the inner diameter ϕA of the contact section 4a. When the shaft 1 is press fit between the contact sections 4a, pressure acts on the contact section 4a in the direction of the arrows A1 to compress the shaft 1. When this occurs, tensile stress works on the non-contact section 4b. In the state shown in FIG. 5(a), the pressure at which the contact section 4a pushes on the shaft 1 is maximized. The friction force between the shaft 1 and the bearing 4, and the torque when the shaft 1 is rotated in one direction (clockwise direction) and the other direction (counterclockwise direction) with respect to the housing 2 are also maximized.

FIG. 5(b) shows a state in which the adjustment screw 5 is tightened. When the adjustment screw 5 is tightened, and the non-contact section 4b is pushed by the rod 6, this time, bending stress works on the non-contact section 4b, and the non-contact section 4b deforms such that a gap δ between the shaft 1 and the non-contact section 4b becomes smaller. The non-contact section 4b is formed in a convex arc shape toward the outside, and therefore, the non-contact section 4b deforms from an arc shape to approach a linear shape. In association with this deformation, the contact section 4a tries to separate from the shaft 1 in the direction shown by the arrows A2. Accordingly, the pressure at which the contact section 4a presses against the shaft 1 decreases, and the friction force between the shaft 1 and the bearing 4, and the torque when the shaft 1 is rotated in the clockwise direction and the counterclockwise direction with respect to the housing 2 also decrease. Note that while the torque does decrease, the thickness tA in the radial direction of the contact section 4a is thicker than the thickness tB in the radial direction of the non-contact section 4b, and the contact section 4a does not deform for the most part. The contact section 4a continues to contact the shaft 1 over the entire inner circumferential surface in a manner similar to that of a drum brake of an automobile.

According to the hinge device of the present embodiment, the following effect is exhibited. Deformation of the end-less annular bearing 4, which has, alternating in the circumferential direction, the contact section 4a and the non-contact section 4b, is used to change the friction force between the shaft 1 and the contact section 4a of the bearing 4. Therefore, the friction force of the contact section 4a of the bearing 4 can be significantly changed.

The bearing 4 is configured such that the pressure of the contact section 4a becomes smaller when the rod 6 presses the non-contact section 4b. The bending stress is used to deform the non-contact section 4b of the bearing 4, and therefore the non-contact section 4b can be easily deformed even with a small force from the rod 6. Moreover, even if the adjustment screw 5 is loosened due to aging, because the friction force becomes larger in association with loosening of the adjustment screw 5, the matter of the friction force decreasing as the adjustment screw becomes loose, as occurs with conventional hinge devices, can be prevented.

The pair of contact sections 4a is provided so as to be mutually facing in the bearing 4, and therefore a stable friction force can be generated. The pair of rods 6 respectively presses on each of the pair of non-contact sections 4b, and therefore that pair of non-contact sections 4b can be uniformly deformed.

FIG. 6 shows another example of a torque adjusting type hinge device of the first embodiment of the present invention. This example differs from the torque adjusting type hinge device shown in FIG. 5 in that the rods 6 are not provided, and the adjustment screw 5 directly contacts the non-contact section 4b of the bearing 4 to act as a force imparting section. The configurations of the shaft 1 and bearing 4 are the same as those of the torque adjusting type hinge device shown in FIG. 5, and therefore, the same reference numerals are used in FIG. 6, and explanations thereof are omitted.

As shown in FIG. 6(a), with the torque adjusting type hinge device of this example, as a force imparting section, the adjustment screw 5 directly contacts the non-contact section 4b of the bearing 4. A pressing projection 2c is formed in the housing 2 at a position separated 180 degrees from the adjustment screw 5. As shown in FIG. 6(b), when the adjustment screw 5 is tightened, the non-contact sections 4b are compressed and deformed between the adjustment screw 5 and the pressing projection 2c. In association with the deformation of the non-contact section 4b, the contact section 4a tries to separate from the shaft 1 in the directions shown by the arrows A2, and the friction force between the contact section 4a and the shaft 1 decreases.

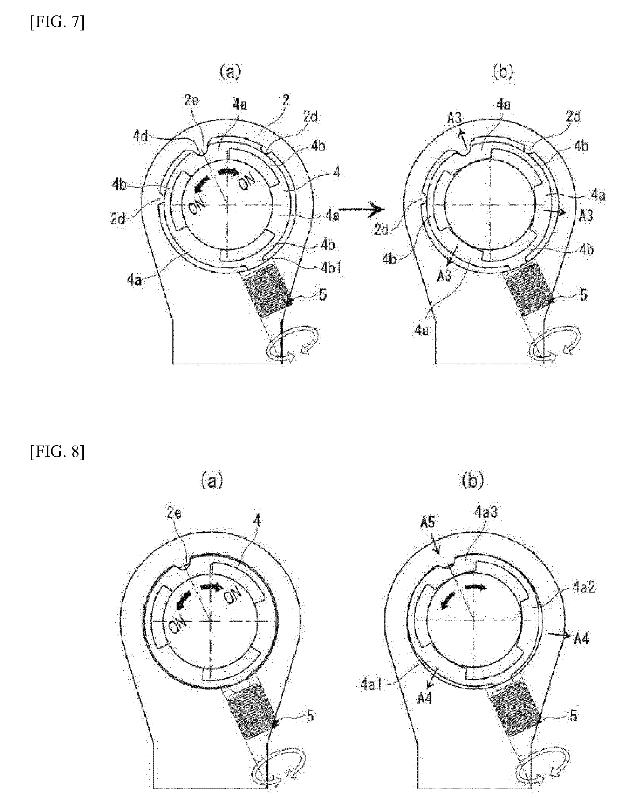

FIG. 7 shows yet another example of a torque adjusting type hinge device of the first embodiment of the present invention. This example differs from the torque adjusting type hinge device shown in FIG. 6 in that three contact sections 4a and three non-contact sections 4b are provided with the bearing 4.

The external form of the bearing of this example is circular. Both the inner circumference of the non-contact section 4b and the inner form of the contact section 4a are arc shaped. The radius of the inner circumference of the non-contact section 4b is larger than the radius of the inner circumference of the contact section 4a. When the shaft 1 is press fit between the contact sections 4a, friction force works between the shaft 1 and the contact sections 4a. A projection 4b1 is formed at the non-contact section 4b near the adjustment screw. Two pressing projections 2d that contact two of the non-contact sections 4b are formed in the housing 2. Furthermore, a rotation stopper 2e that fits into a recessed part 4d of the bearing 4 is formed in the housing 2 to stop the rotation of the bearing 4.

As shown in FIG. 7(b), when the adjustment screw 5 is tightened, the adjustment screw 5 presses the non-contact section 4b. The two pressing projections 2d also press the two other non-contact sections 4b with counteraction. The non-contact sections 4b of the bearing 4 are uniformly pressed by the adjustment screw 5 and the pressing projections 2d arranged at uniform intervals of 120 degrees. In association with the deformation of the three non-contact sections 4b, the contact sections 4a try to separate from the shaft in the directions shown by the arrows A3, and the friction force between the contact sections 4a and the shaft 1 decreases.

FIG. 8 shows yet another example of a torque adjusting type hinge device of the first embodiment of the present invention. This example differs from the torque adjusting type hinge device shown in FIG. 7 in that the pressing projections 2d are not provided in the housing 2. The rotation stopper 2e is provided in the housing 2 to stop the rotation of the bearing 4.

As shown in FIG. 8(b), when the adjustment screw 5 is tightened, the three non-contact sections 4b deform, and two contact sections 4a1, 4a2 try to separate from the shaft 1 in the directions shown by the arrows A4, and one contact section 4a3 tries to approach the shaft 1 in the direction shown by the arrow A5. Through this, the friction force between the shaft 1 and the contact sections 4a1∼4a3 changes, and the friction force overall at the three contact sections 4a1 to 4a3 is reduced.

Torque adjusting type hinge devices of the first embodiment of the present invention were described above. Next, one-way type torque hinge devices of a second embodiment of the present invention are described.

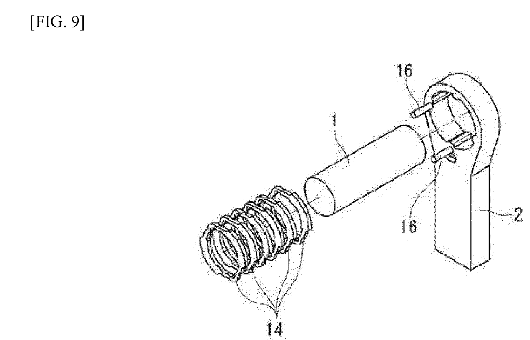

FIG. 9 shows an exploded perspective view of the one-way type torque hinge device of the second embodiment of the present invention. The one-way type torque hinge device of this embodiment is provided with a shaft 1, bearings 14 into which the shaft 1 is inserted, and a housing 2 for limiting the rotation of the bearings 14. The configurations of the shaft 1 and housing 2 are roughly the same as those of the hinge device shown in FIG. 2, and therefore the same reference numerals are assigned, and descriptions thereof are omitted. Unlike the hinge device shown in FIG. 2 however, the torque hinge device of this embodiment is configured with rods 16 disposed as force imparting sections between the outside of the shaft 1 and the inside of the bearings 14.

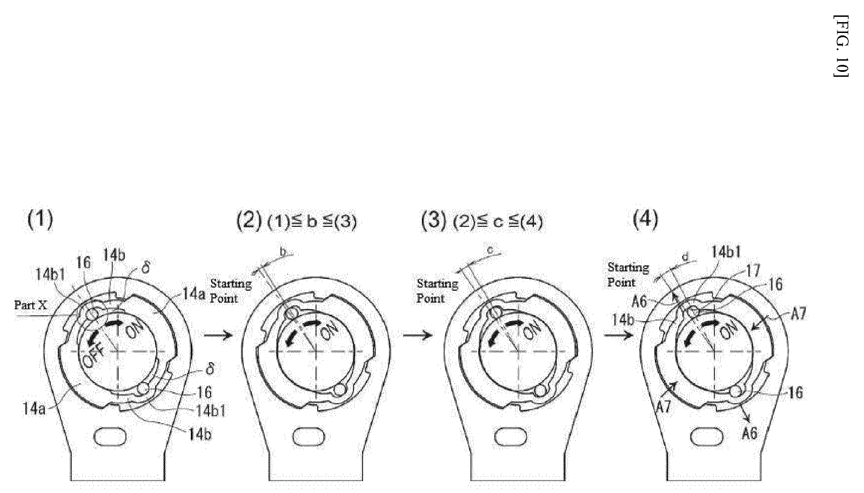

FIG. 10 shows an operation diagram when the shaft of the one-way type torque hinge device is rotated in the clockwise direction. First, the configuration of the bearings 14 is described with reference to FIG. 10(1). The bearing 14 has, alternating in the circumferential direction, two non-contact sections 14b and two contact sections 14a. The contact sections 14a contact the shaft 1, and a friction force works between the contact sections 14a and the shaft 1. A gap δ is present between the non-contact sections 14b and the shaft 1. A housing part 14b1 for housing the rod 16 such that it is capable of moving in the circumferential direction is formed in the non-contact section 14b.

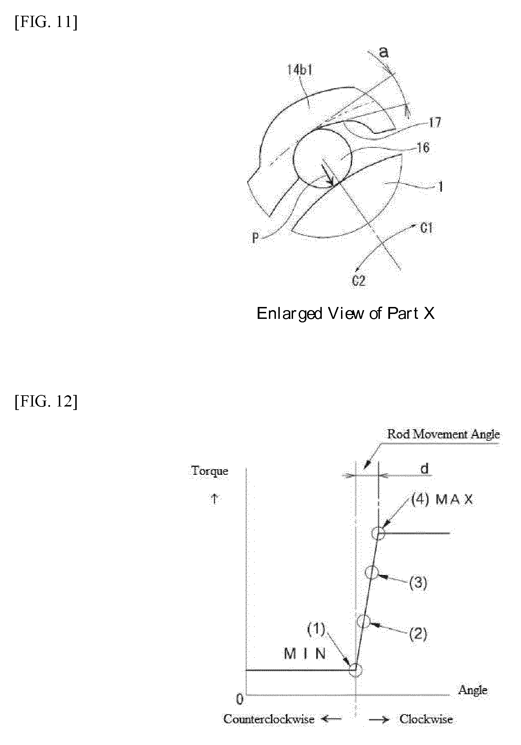

FIG. 11 shows an enlarged view of the housing part 14b1 of the bearing 14. An inclined surface 17 that becomes closer to the shaft 1 moving in one direction (clockwise direction (C1)) of the circumferential direction is formed in the housing part 14b1of the bearing 14. The inclination angle of the inclined surface 17 with respect to the tangential direction is 'a'. A vertical drag P works between the shaft 1 and the rod 16 due to the elastic force of the bearing 14.

In the initial state shown in FIG. 10(1), the rod 16 is positioned at a left end part in the circumferential direction of the housing part 14b1. When the shaft 1 is rotated in the clockwise direction, as shown in FIG. 10(2) → FIG. 10(3) → FIG. 10(4), the rod 16 moves in the clockwise direction in the housing part 14b1. The amount of movement of the rod 16 from the starting point is shown by b, c, and d. At the state shown in FIG. 10(4), the rod 16 is positioned at the right end part of the housing part 14b1. Furthermore, because the inclined surface 17 is formed in the housing part 14b1, the rod 16 causes the non-contact section 14b of the bearing 14 to deform outwardly (directions of arrows A6) through a wedge action. As shown in FIG. 10(4), in association with outward deformation of the non-contact section 14b (in the direction of the arrows A6), the contact section 14a attempts to further approach the shaft 1 in the directions of the arrows A7. Therefore, the pressure at which the contact section 14a presses on the bearing 14 increases, and the friction force becomes larger.

FIG. 12 is a graph showing the relationship between the angle of the shaft 1 and the torque generated on the shaft 1 when the shaft 1 is rotated clockwise and counterclockwise. In FIG. 12, (1), (2), (3), and (4) correspond to the states of (1), (2), (3), and (4) of FIG. 10. When the shaft 1 is rotated in the clockwise direction, the torque increases in proportion to the angle of the shaft 1. When the movement amount of the rod 16 becomes d (state shown in FIG. 10(4)), the torque is maximized. When the shaft 1 is rotated further in the clockwise direction, the shaft 1 slides on the inner side of the rod 16. Even if the shaft 1 is further rotated, the movement amount of the rod 16 does not exceed d. Accordingly, that maximum torque is maintained.

When the shaft 1 is rotated in the counterclockwise direction, the rod 16 returns to the initial state shown in FIG. 10(1), and the torque is minimized. When the rod 16 is rotated further in the counterclockwise direction, the shaft 1 slides on the inner side of the rod 16. Even if the shaft 1 is rotated further, the rod 16 maintains its initial position, and thus the minimum torque is continued.

According to the one-way type torque hinge device of the present embodiment, the housing part 14bl is provided at the bearing 14, and the inclined surface 17 is formed in the housing part 14b1, and therefore a one-way type torque hinge device can be realized through wedge action. Moreover, by using the deformation of the end-less annular bearing 14, the difference in torque between when the shaft 1 is rotated clockwise and when it is rotated counterclockwise can also be increased.

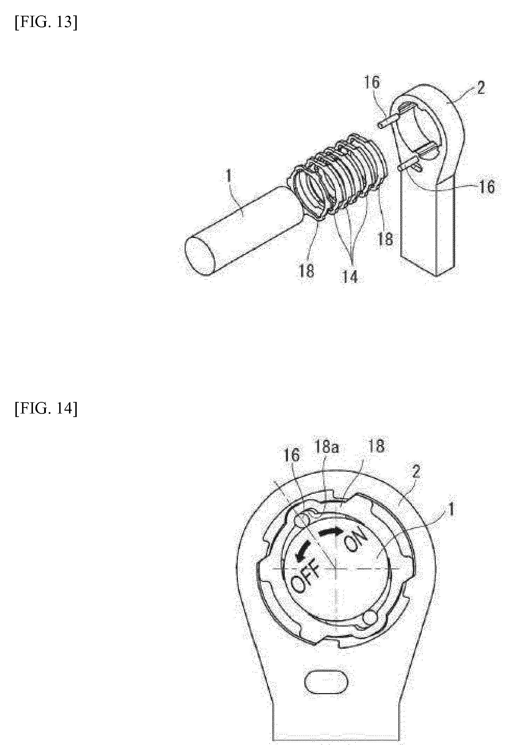

FIG. 13 shows another example of a one-way type torque hinge device of a second embodiment of the present invention. With this example, an annular plate 18 is added as an annular member to the one-way type torque hinge device shown in FIG. 9. The configurations of the shaft 1, bearing 14, rod 16, and housing 2 are the same as those of the one-way type torque hinge device shown in FIG. 9, and therefore the same reference numerals are assigned, and the descriptions thereof are omitted.

As shown in FIG. 14, the annular plate 18 encloses the shaft 1 and the rods 16 contacting the shaft 1, and biases the rods 16 to the shaft 1. By providing the annular plate 18, a vertical drag can be acted between the rod 16 and the shaft 1, and the rods 16 can be moved together with the shaft 1. Note that a relief groove 18a is formed in the annular plate 18 such that movement of the rod 16 in the housing part 14b1 1 of the bearing 14 is permitted. Rotation of the annular plate 18 is limited by the housing 2.

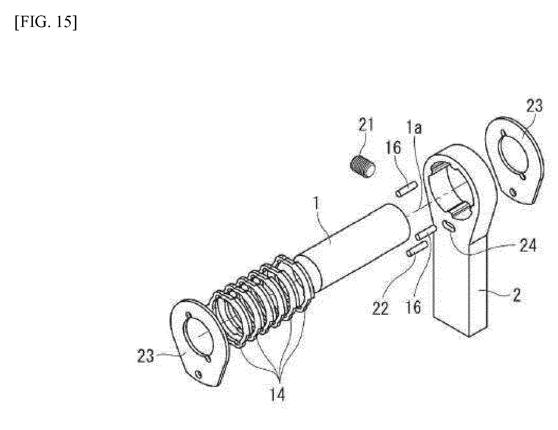

FIG. 15 shows yet another example of a one-way type torque hinge device of the second embodiment of the present invention. With this example, a torque adjustment mechanism is added to the one-way type torque hinge device shown in FIG. 9. The configurations of the shaft 1, bearing 14, rod 16, and housing 2 are the same as those of the one-way type torque hinge device shown in FIG. 9, and therefore the same reference numerals are assigned, and descriptions thereof are omitted.

As shown by the graph of FIG. 12, when the shaft 1 of the one-way type torque hinge device is rotated in the clockwise direction, the torque increases linearly in association with movement of the rod 16 in the clockwise direction. If movement of the rods 16 is stopped while the torque is increasing, the torque can be adjusted. With this example, the movement amount of the rods 16 in the clockwise direction is limited by torque adjustment mechanisms 21 to 23, and the torque is adjusted.

As shown in FIG. 15, the torque adjustment mechanisms 21 to 23 include a retention plate 23 for guiding the movement of the rod 16 in the radial direction, a pin 22, which inserts into the retention plate 23, and a torque adjustment screw 21, which screws into the housing 2. The retention plate 23 is capable of rotating around a center line 1a with respect to the housing 2. The pin 22 that inserts into the retention plate 23 is also capable of moving in the circumferential direction together with the retention plate 23. An elongated hole 24 for allowing movement of the pin 22 is formed in the housing 2. Rotation of the retention plate 23 in the clockwise direction at or above a prescribed angle is limited by the torque adjustment screw 21.

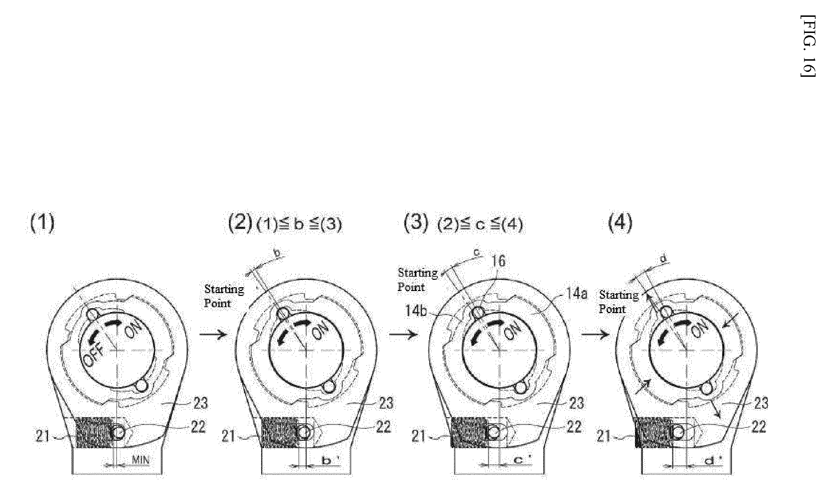

FIG. 16 is a diagram showing the relationship between the position of the torque adjustment screw 21 and the angle of rotation of the retention plate 23. The reference letters b', c', and d' in FIG. 16 show positions of the torque adjustment screw 21. Rotation of the retention plate 23 in the clockwise direction is limited by the torque adjustment screw 21. FIG. 16(1) shows a state in which the rotation angle of the retention plate 23 in the clockwise direction is set to a minimum. Moving from FIG. 16(2) → FIG. 16(3) → FIG. 16(4), the rotation angle of the retention plate 23 in the clockwise direction is set to be larger. As the rotation angle of the retention plate 23 in the clockwise direction is limited, the movement of the rods 16 in the clockwise direction is also limited. The reference numerals b, c, and d in FIG. 16(2), (3), and (4) show the amount of possible movement of the rod 16.

For example, if the position of the torque adjustment screw 21 is adjusted to the position c' shown in FIG. 16(3), when the shaft 1 is rotated clockwise, the retention plate 23 is rotated clockwise from the state shown in FIG. 16(1) to the state shown in FIG. 16(3). However, because rotation is limited by the torque adjustment screw 21, further rotation in the clockwise direction does not occur. In conjunction with the rotation of the retention plate 23 in the clockwise direction, the rods 16 also rotate to the state shown in FIG. 16(3). As the rods 16 move, the non-contact section 14b of the bearing 14 deforms outwardly by the wedge action, and the friction force of the contact sections 14a is increased. However, because movement of the rods 16 in the clockwise direction is limited to the state shown in FIG. 16(3), even if the shaft 1 is further rotated in the clockwise direction, the rods 16 do not move in the clockwise direction.

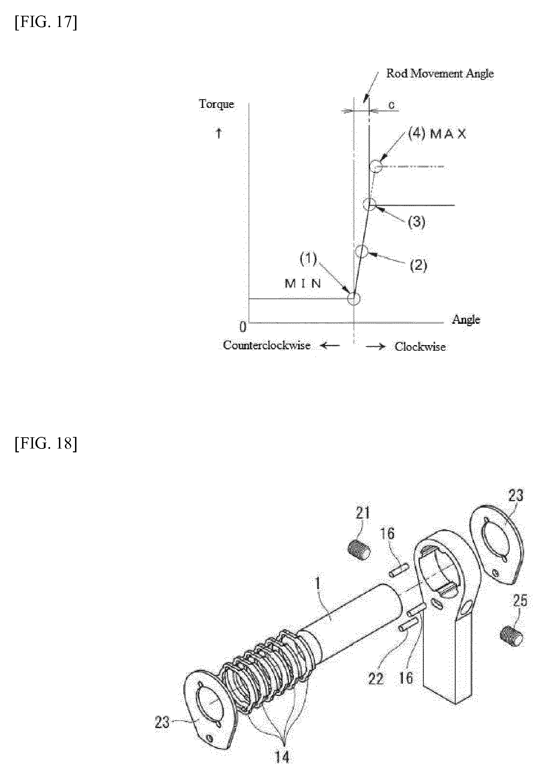

FIG. 17 is a graph showing the relationship between the angle of the shaft 1 and the torque when the position of the torque adjustment screw 21 is adjusted to the position c' shown in FIG. 16(3). When the shaft 1 is rotated clockwise, the torque increases until the state of (3) is reached, but it does not increase to the magnitude shown by (4). Even if the shaft 1 is rotated further, the torque remains at the magnitude of (3). When the shaft is rotated in the counterclockwise direction, the retention plate 23 rotates counterclockwise until it reaches the state shown in FIG. 16(1). The rods 16 return to the start position, and therefore the torque also returns to a minimum level.

FIG. 18 shows yet another example of a one-way type torque hinge device of the second device of the present invention. With this example, a second torque adjustment screw 25 for limiting the rotation of the retention plate 23 in the counterclockwise direction is added to the one-way type torque hinge device shown in FIG. 15. The configurations of the shaft 1, bearing 14, rod 16, housing 2, retention plate 23, pin 22, and torque adjustment screw 21 are the same as those of the one-way type torque hinge device shown in FIG. 15, and therefore the same reference numerals are assigned, and descriptions thereof are omitted.

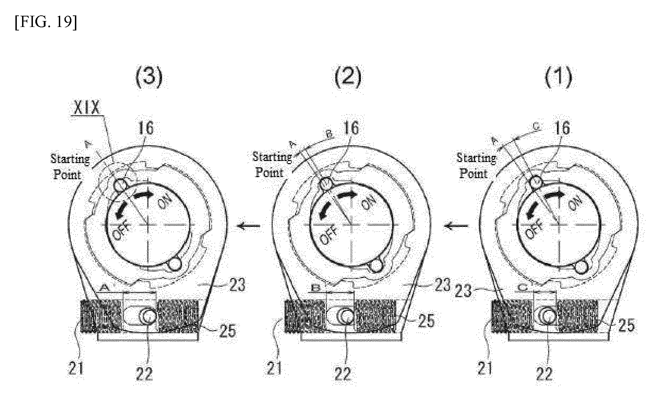

FIG. 19 shows a state in which the second torque adjustment screw 25 is used to limit movement of the rods 16 in the counterclockwise direction. In FIG. 19(1), the position of the second adjustment screw 25 is set to C', and even if the rod 16 tries to move counterclockwise from the right end of the housing part 14b1, it can only move to a position separated distance C from the position of a starting point A. In FIG. 19(2), the position of the second adjustment screw 25 is set to B', and the rod 16, which moves counterclockwise from the right end of the housing part 14b1, is able to move to a position separated distance B from the starting point A. In FIG. 19(3), the position of the second torque adjustment screw 25 is set to A', and the rod 19, which moves counterclockwise from the right end of the housing part 14b1, is able to move to near the starting point A.

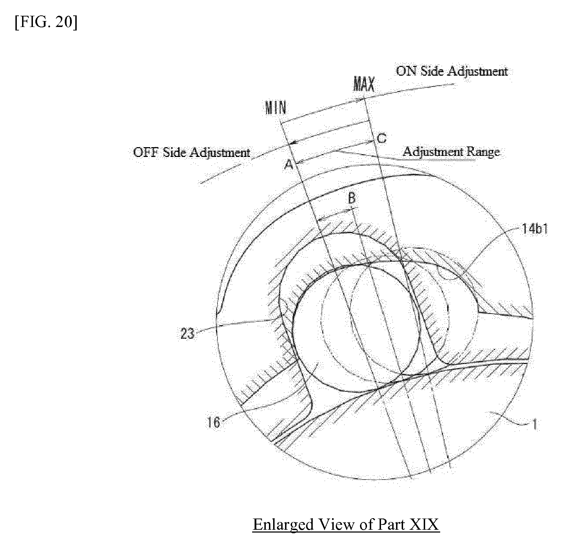

FIG. 20 shows an adjustment range of the amount of movement of the rod 16 in the housing part 14b1 of the bearing 14. If the amount of movement of the rod 16 is not limited by the torque adjustment screw 21 and the second torque adjustment screw 25, the rod 16 is able to move in the housing part 14b1 from the A position to the C position. When the rotation angle of the retention plate 23 is limited by the adjustment screw 21 and the second adjustment screw 25, the movement of the rod 16 retained by the retention plate 23 is also limited. The amount of movement of the rod 16 is adjusted in a range of A-C shown in FIG. 20. By adjusting the movement amount of the rod 16, the torque when the shaft 1 is rotated clockwise, and the torque when the shaft 1 is rotated counterclockwise can be adjusted.

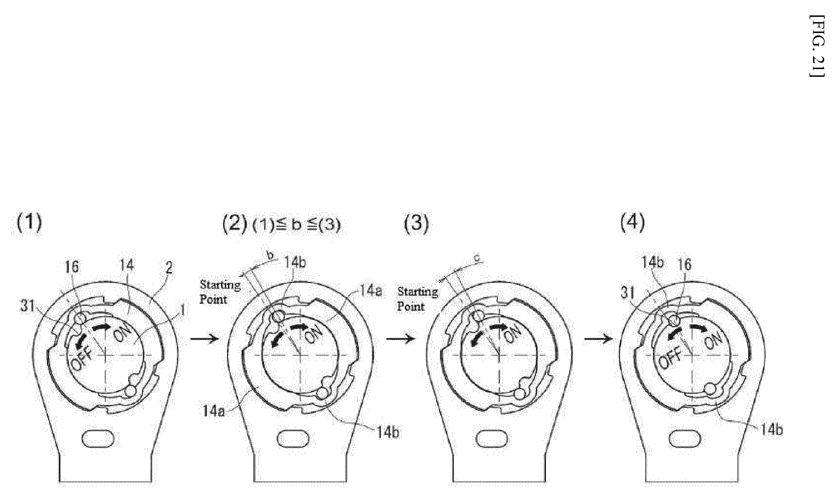

FIG. 21 shows yet another example of a one-way type torque hinge device of the second embodiment of the present invention. The configurations of the bearing 14, housing 2, and rod 16 are the same as those of the one-way type torque hinge device shown in FIG. 15, and therefore the same reference numerals are assigned, and descriptions thereof are omitted. This example differs from the one-way type torque hinge shown in FIG. 15 in that dimples 31 are provided in the shaft 1 as recessed parts into which the rods 16 enter.

As shown in FIG. 21(1) → FIG. 21(2) → FIG. 21(3), when the shaft 1 is rotated clockwise, the rods 16 push the non-contact sections 14b of the bearing 14 outward through a wedge action, the friction force of the contact sections 14a becomes larger, and therefore the torque also increases. When the rods 16 rotate as far as the intermittent state shown in FIG. 21(4), the rods 16 enter the respective dimples 31. As a result, the rods 16 no longer push on the non-contact sections 14b, and therefore the torque decreases.

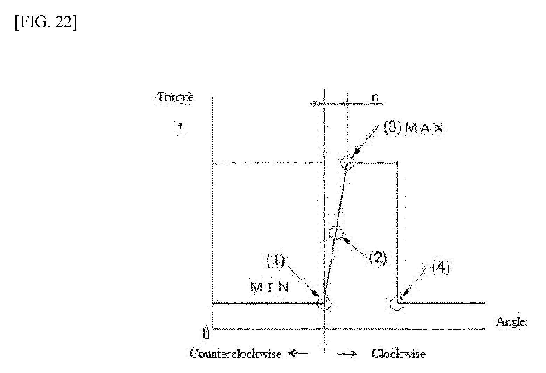

FIG. 22 shows the change in torque at this time. When the shaft 1 is rotated clockwise, the torque increases as shown by (1), (2), and (3). However, when the rods 16 enter the respective dimples 31, the torque suddenly decreases as shown by (4).

By providing dimples 31 in the shaft 1 and thereby causing the torque to decrease at an intermittent state, reverse rotation of the shaft 1 stopped at the intermittent state can be prevented. If torque remains, there is a chance that the shaft 1 could rotate in reverse, but by causing the torque to decrease, reverse rotation of the shaft 1 can be prevented. Note that if the shaft 1 is rotated in the counterclockwise direction, the rods 16 exit the respective dimples 31, and return to the original state as shown by FIG. 21(4) → FIG. 21(3) → FIG. 21(2) → FIG. 21(1).

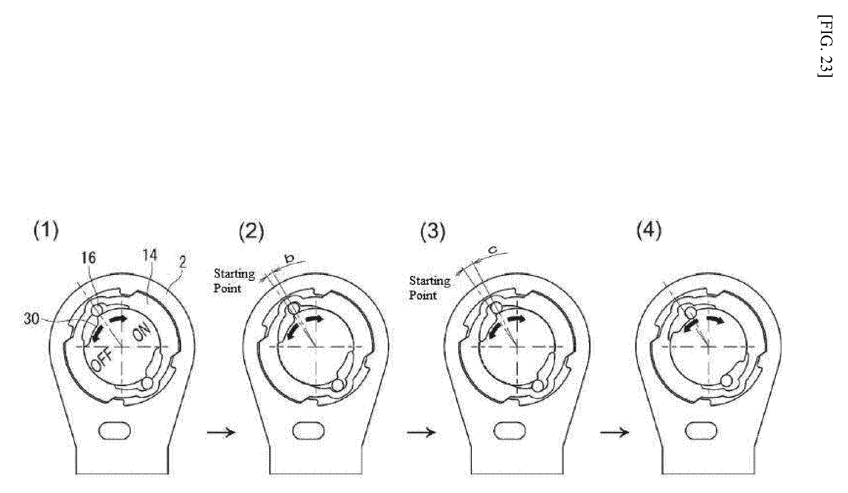

FIG. 23 shows yet another example of a one-way type torque hinge device of the second embodiment of the present invention. The configurations of the bearing 14, housing 2, and rod 16 are the same as those of the one-way type torque hinge device shown in FIG. 21, and therefore the same reference numerals are assigned, and descriptions thereof are omitted. This example differs from the one-way type torque hinge shown in FIG. 21 in that instead of dimples 31, relief grooves 30 are provided in the shaft 1 as recessed parts into which the rods 16 enter. Even though relief grooves 30 are formed in place of the dimples 31, the torque at the intermittent state shown in FIG. 23(4) can be reduced.

One-way type torque hinge devices of the second embodiment of the present invention were described above. Next, static ≧ dynamic torque type hinge devices of a third embodiment of the present invention are described below.

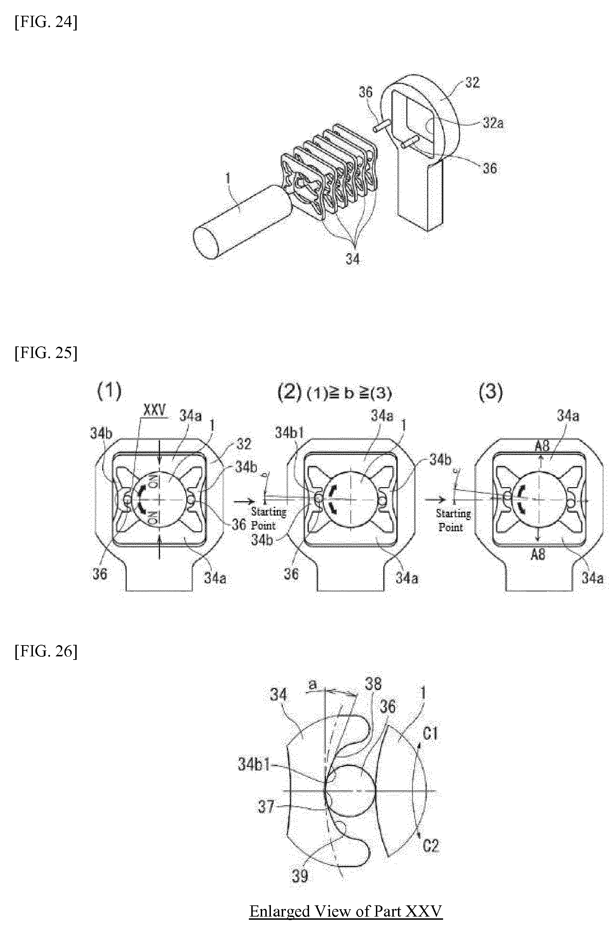

FIG. 24 shows a static ≧ dynamic torque type hinge device of the third embodiment of the present invention. The static ≧ dynamic torque type hinge device of this embodiment is provided with a shaft 1, a plurality of bearings 34 into which the shaft 1 is inserted, rods 36 arranged between the shaft 1 and the bearings 34, and a housing 32 for housing the bearings 34. With this embodiment, the bearings 34 are formed in a quadrilateral shape, and a quadrilateral hole 32a is opened in the housing 32 to house the bearings 34.

FIG. 25 shows the change in friction force when the shaft 1 is rotated. First, the shape of the bearing 34 is explained with reference to FIG. 25(1). The bearing 34 of this example has, alternating in the circumferential direction, contact sections 34a that contact the shaft 1 and non-contact sections 34b that form a gap with the shaft 1. The thickness in the radial direction of the non-contact section 34b is thinner than the thickness in the radial direction of the contact section 34a. The non-contact section 34b is formed in a convex arc shape toward the shaft 1.

As shown by the enlarged view of FIG. 26, a housing part 34b1 is provided in the non-contact section 34b to house the rod 36 arranged between the outside of the shaft 1 and the inside of the bearing 34 such that the rod 36 is capable of moving in the circumferential direction of the bearing 14. A first inclined surface 38 and a second inclined surface 39 are provided in the housing part 34b1, the first inclined surface 38 approaching the shaft in one direction (clockwise direction C1) in the circumferential direction of the bearing 34 from a center part 37, and the second inclined surface 39 approaching the shaft 1 in the other direction (counterclockwise direction C2) in the circumferential direction of the bearing 34 from the center part 37. The inclination angles of the first inclined surface 38 and the second inclined surface 39 with respect to the tangential direction of the center part 37 are 'a'. The dashed line in FIG. 26 shows an imaginary arc concentric with the shaft 1.

At the initial state shown in FIG. 25(1), the rod 36 is positioned at the center part of the housing part 34b1. The pair of contact sections 34a of the bearing 34 compresses the shaft 1, and friction force acts thereupon. As shown in FIG. 25(2) → FIG. 25(3), when the shaft 1 is rotated clockwise, the rods 36 move in the clockwise direction in the respective housing parts 34b1. In association with the clockwise movement of the rods 36, the rods 36 cause the respective non-contact sections 34b of the bearing 34 to deform outwardly through a wedge action. The non-contact section 34b of the bearing 34 is formed in a convex arc shape toward the shaft 1, and therefore, as shown by the arrows A8 of FIG. 25(3), the pair of contact sections 34a tries to separate from the shaft 1. Through this, the pressure of the contact sections 34a becomes smaller. When the shaft 1 is rotated in the counterclockwise direction as well, similarly, the pressure of the contact sections 34a decreases.

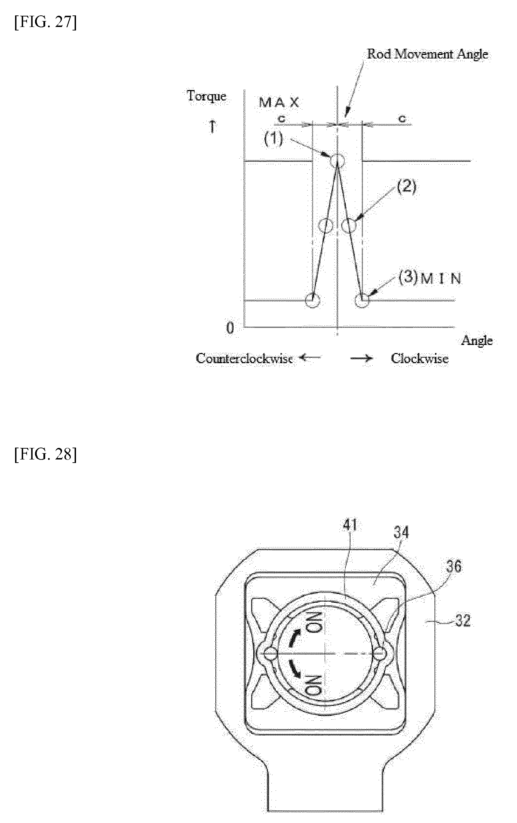

FIG. 27 is a graph showing the relationship between the angle of the shaft 1 and the torque when the shaft 1 is rotated in the clockwise and counterclockwise directions. When the shaft 1 is stopped, as shown by (1), the torque is maximized. When the shaft 1 is rotated clockwise, the torque then decreases as shown by (2) and (3). Similarly, the torque decreases when the shaft 1 is rotated counterclockwise.

According to the static ≧ dynamic torque type hinge device of this embodiment, the holding torque when the shaft 1 is stopped is large, and the torque when the shaft 1 is rotated clockwise and counterclockwise can be reduced. For example, the opening angle of a display device of a notebook computer can be stabilized with a large holding torque. Furthermore, when the display device is opened, the torque is reduced, and therefore the display device can be easily opened.

FIG. 28 shows an example to which an annular plate 41 is added as an annular member to the static ≧ dynamic torque type hinge device shown in FIG. 24. The configurations of the shaft 1, bearing 34, rod 36, and housing 32 are the same as those of the one-way type torque hinge device shown in FIG. 24, and therefore the same reference numerals are assigned, and descriptions thereof are omitted.

As shown in FIG. 28, the annular plate 41 encloses the shaft 1 and the rods 36 contacting the shaft 1, and biases the rods 36 to the shaft 1. By providing the annular plate 41, vertical drag can be caused to act between the rods 36 and the shaft 1, and the rods 36 can be moved together with the shaft 1.

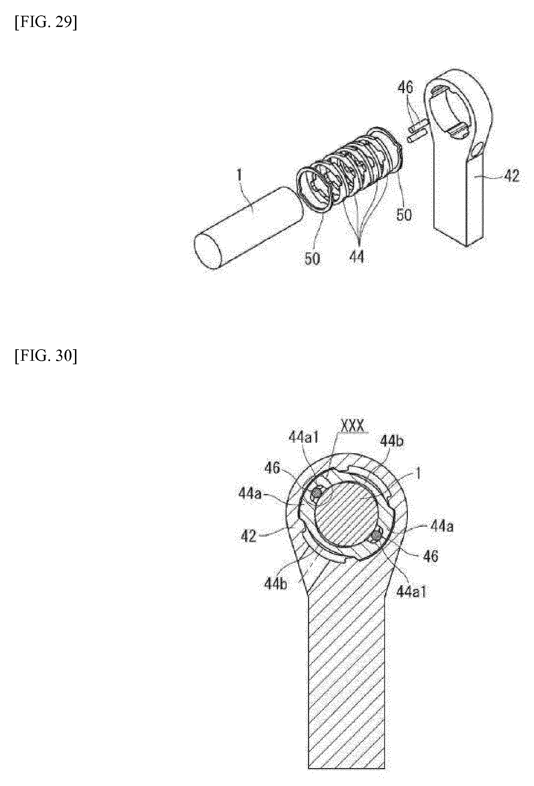

FIG. 29 shows yet another example of a static ≧ dynamic torque type hinge device of the third embodiment of the present invention. The static ≧ dynamic torque type hinge device of this embodiment is provided with a shaft 1, a plurality of bearings 44 into which the shaft 1 is inserted, rods 46 arranged between the shaft 1 and the bearings 44, and a housing 42 for housing the bearings 44.

As shown by FIG. 30, the bearing 44 has, alternating in the circumferential direction, contact sections 44a that contact the shaft 1, and non-contact sections 44b that form a gap with the shaft 1. This embodiment differs from the static ≧ dynamic torque type hinge device shown in FIG. 25 in that the rod 46 is provided at the contact section 44a of the bearing 44. The rods 46 are each housed in respective housing parts 44a1 of the contact sections 44a of the bearing 44.

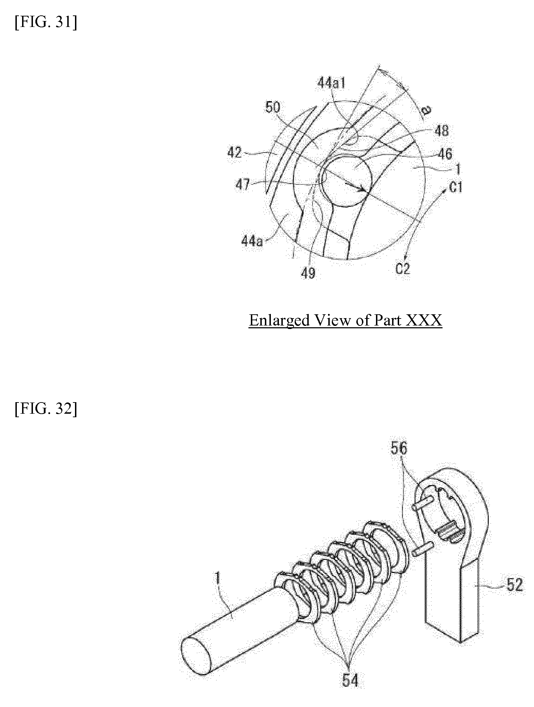

As shown by the enlarged view of FIG. 31, a first inclined surface 48 and a second inclined surface 49 are formed in the housing part 44a1 of the bearing 44, the first inclined surface 48 approaching the shaft 1 in one direction (clockwise direction C1) in the circumferential direction of the bearing 44 from a center part 47, and the second inclined surface 49 approaching the shaft 1 in the other direction (counterclockwise direction C2) in the circumferential direction of the bearing 44 from the center part 47. The inclination angles of the first inclined surface 48 and the second inclined surface 49 with respect to the tangential direction of the center part 47 are 'a'. The dashed line in FIG. 31 shows an imaginary arc concentric with the shaft 1. The rods 46 are biased to the shaft 1 by an annular plate 50.

When the shaft 1 is rotated clockwise, the rod 46 moves clockwise in the housing part 44a1, and the contact section 44a of the bearing 44 tries to separate from the shaft 1 through wedge action. As a result, the pressure of the contact section 44a is reduced. When the shaft 1 is rotated in the counterclockwise direction as well, similarly, the pressure of the contact section 44a decreases.

FIG. 32 shows yet another example of a static ≧ dynamic torque type hinge device of the third embodiment of the present invention. The static ≧ dynamic torque type hinge device of this embodiment is provided with a shaft 1, a plurality of bearings 54 into which the shaft 1 is inserted, and a housing 52 for housing the bearings 54.

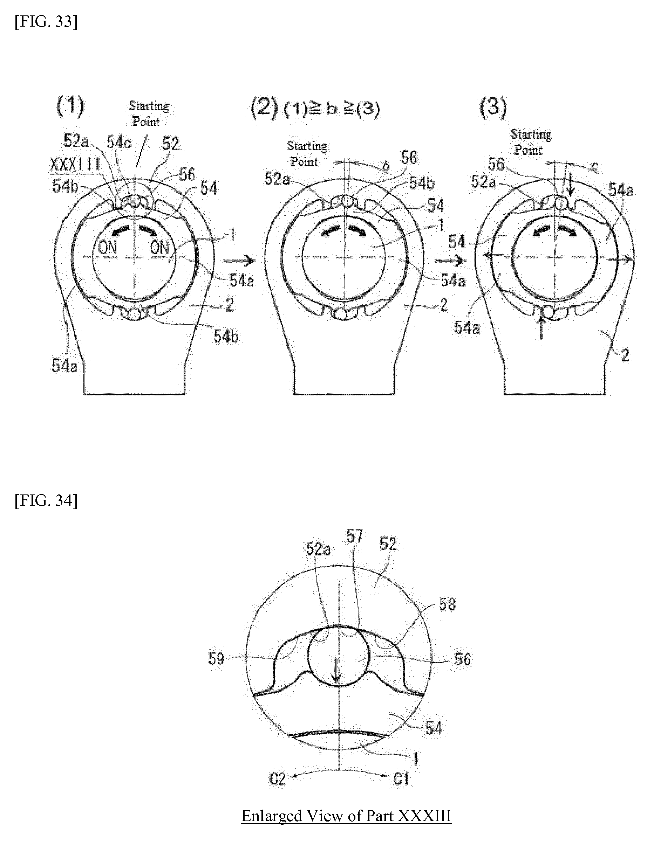

As shown in FIG. 33, this embodiment differs from the static ≧ dynamic torque type hinge device shown in FIG. 25 in that rods 56 are provided between the bearings 54 and the housing 52. The bearing 54 has, alternating in the circumferential direction, contact sections 54a that contact the shaft 1, and non-contact sections 54b that form a gap with the shaft 1. Holding recessed parts 54c for holding the rods 56 are formed in the outer circumference of the bearing 54.

A housing part 52a is provided in the housing 52 to house the rods 56 arranged between the outside of the bearing 54 and the inside of the housing 52 such that the rods 56 are capable of moving in the circumferential direction of the housing 52.

As shown by the enlarged view of FIG. 34, a first inclined surface 58 and a second inclined surface 59 are formed in a housing part 52a of the housing 52, the first inclined surface 58 approaching the bearing 54 in one direction (clockwise direction C1) in the circumferential direction of the housing 52 from a center part 57, and the second inclined surface 59 approaching the bearing 54 in the other direction (counterclockwise direction C2) in the circumferential direction of the housing 52 from the center part 57.

As shown by FIG. 33(1) → FIG. 33(2), when the shaft 1 is rotated in the clockwise direction, the bearings 54 move in the clockwise direction together with the shaft 1. The rods 56 move clockwise together with the bearings 54 in the housing part 52a, and through a wedge action, the rods 56 press the non-contact section 54b of the bearing 54. In association with the inward deformation of the non-contact section 54b, the contact sections 54a try to separate from the shaft 1. As a result, the pressure of the contact sections 54a decreases. As shown in FIG. 33(3), when the rod 56 moves to one end part of the housing part 52a, the rotation of the rod 56 and the bearing 54 is limited. As with this example, even if a static ≧ dynamic torque type hinge device is configured, the holding torque when the shaft 1 is stopped can be made larger than when the shaft 1 is rotated clockwise. The same applies to when the shaft 1 is rotated counterclockwise.

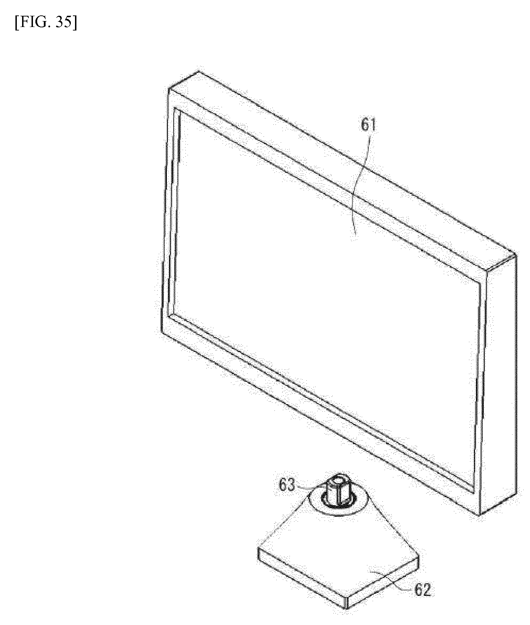

FIG. 35 shows an example for which the hinge device of the present embodiment is incorporated into a stand 62 for a television 61. The torque adjusting type hinge device of the first embodiment, or the static ≧ dynamic torque type hinge device of the third embodiment can be used for the hinge device 63. If the hinge device of the present embodiment is used, the angle of the television 61 can be easily set, and the angle of the television 61 can be maintained with a large holding torque.

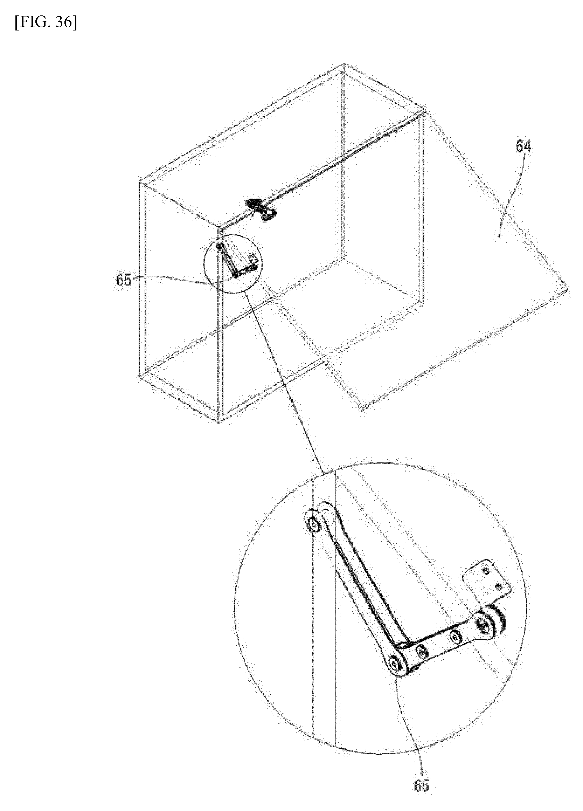

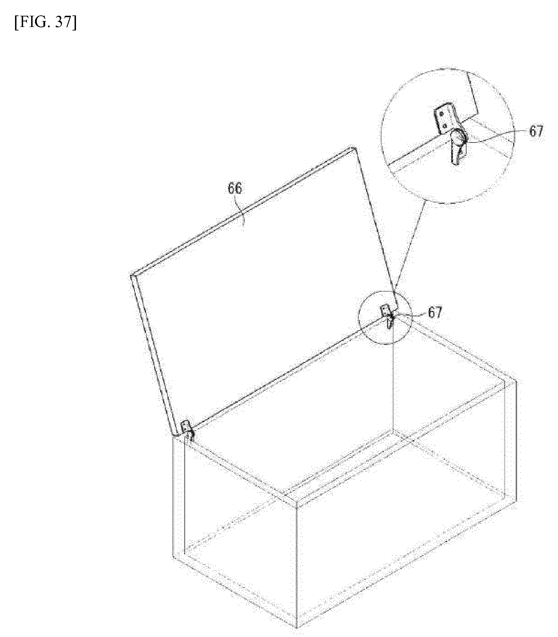

FIG. 36 and FIG. 37 show examples of the hinge device of the present embodiment incorporated into stays 65, 67 for opening and closing flap doors 64, 66. FIG. 36 shows the flap door 64, which opens in the forward direction, and FIG. 37 shows the flap door 66, which opens upwardly. The one-way type torque hinge device of the second embodiment can be used as the hinge device. By using the one-way type torque hinge device, the flap doors 64, 66 can be opened with little force, and the opening angles of the flap doors 64, 66 can be maintained.

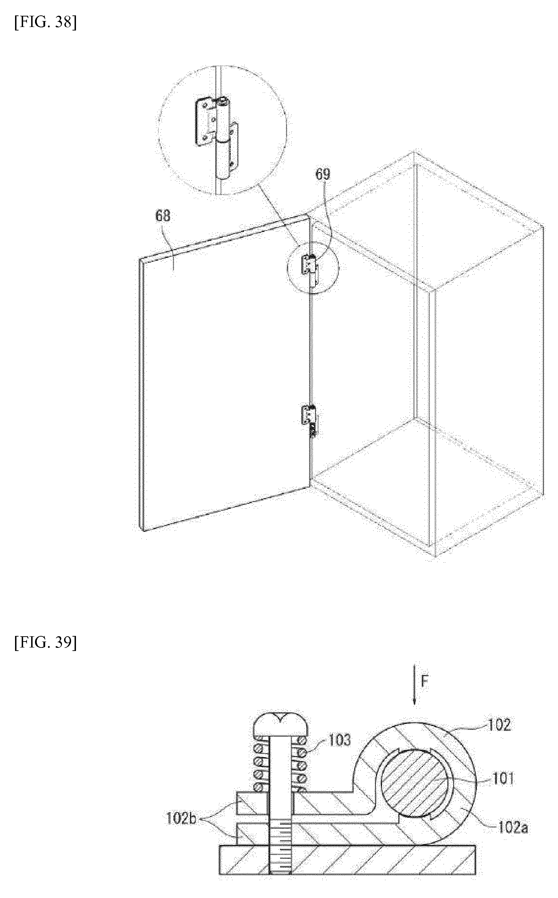

FIG. 38 shows an example of the hinge device of the present embodiment incorporated into a hinge 69 for a hinged door 68. Any of the hinge devices of the first to third embodiments can be incorporated in the hinge 69.

Note that with each of the examples shown by FIG. 35 to FIG. 38, one of either the shaft 1 or the housing 2 of the hinge device is fixed to a rotating body, and the other is fixed to a non-rotating body. In addition to the examples described above, the hinge device of the present invention can be used, for example, for adjusting the opening angle of a display device of a notebook computer, the display device of a folding type cell phone, and automotive parts.

First to third embodiments of hinge devices of the present invention were described in detail above. However, the present invention is not limited to the above-described embodiments, and various other embodiments can be realized within a scope that does not depart from the gist of the present invention.

The shapes of the bearings of the above-described embodiments are examples only, and the shape thereof may be changed to various shapes within a scope that does not depart from the gist of the present invention. For example, with the above-described embodiments, the bearing is provided with a plurality of contact sections and non-contact sections, but one each of the contact section and the non-contact section can also be provided. Furthermore, in the above-described embodiments, the rod pushes on the non-contact section of the bearing, but a configuration can also be adopted in which the rod pushes on the contact section of the bearing. In addition, if the bearing can be deformed, components other than the rod and adjustment screw can be adopted in the force imparting section.

With the above-described embodiments, examples were described in which the force imparting section imparted a pressing force on the bearing, but the force imparting section may also impart a tensile force on the bearing.

The present specification is based on Japanese Patent Application No. 2013-228530 filed on November 1, 2013. The details thereof are all included herein.

### REFERENCE NUMERALS

1: shaft
2: housing
4: bearing
4a: contact section
4b: non-contact section
5: adjustment screw (force imparting section)
6: rod (force imparting section)
7: retention plate (retaining member)
7b: groove
14: bearing
14a: contact section
14b: non-contact section
14b1: housing part
16: rod
18: annular plate (annular member)
17: inclined surface
21: torque adjustment screw (torque adjustment mechanism)
22: pin (torque adjustment mechanism)
23: retention plate (torque adjustment mechanism)
25: second torque adjustment screw (torque adjustment mechanism)
30: relief groove (recessed part)
31: dimple (recessed part)
32: housing
34: bearing
34a: contact section
34b: non-contact section
34b1: housing part
36: rod
37: center part
38: first inclined surface
39: second inclined surface
41: annular plate (annular member)
42: housing
44: bearing
44a: contact section
44a1: housing part
44b: non-contact section
46: rod
47: center part
48: first inclined surface
49: second inclined surface
50: annular plate (annular member)
52: housing
52a: housing part
54: bearing
54a: contact section
54b: non-contact section
56: rod
57: center part
58: first inclined surface
59: second inclined surface

## Claims

1. A hinge device comprising:
a shaft;
an end-less annular bearing into which the shaft is inserted, and which has, alternating in a circumferential direction, a contact section contacting the shaft and a non-contact section having a gap with respect to the shaft;
a housing for limiting the rotation of the bearing such that the shaft rotates relative to the bearing; and
a force imparting section for imparting a force on the bearing such that the bearing deforms.

2. The hinge device according to claim 1, wherein the force imparting section is arranged at the outside of the bearing, or is arranged between the outside of the shaft and the inside of the bearing.

3. The hinge device according to claim 1 or claim 2, wherein the bearing is configured such that when the force imparting section presses the non-contact section of the bearing, the pressure at which the contact section of the bearing applies pressure to the shaft changes.

4. The hinge device according to claim 3, wherein a thickness in the radial direction of the non-contact section of the bearing is thinner than the thickness in the radial direction of the contact section of the bearing.

5. The hinge device according to claim 1 or claim 2, wherein the bearing comprises a plurality of contact sections and a plurality of non-contact sections;
a plurality of force imparting sections are provided corresponding to the plurality of non-contact sections; and
each of the plurality of force imparting sections presses each of the plurality of non-contact sections.

6. The hinge device according to claim 1 or claim 2, wherein the force imparting section is provided with a rod which is parallel to the shaft and presses the bearing.

7. The hinge device according to claim 3, wherein the force imparting section is provided with a rod which is parallel to the shaft and presses the bearing.

8. The hinge device according to claim 1 or claim 2, wherein the force imparting section comprises a position adjustment part capable of advancing toward the bearing and retreating, and
by adjusting the position of the position adjustment part, the torque when the shaft is rotated relative to the housing is adjusted.

9. The hinge device according to claim 3, wherein the force imparting section comprises a position adjustment part capable of advancing toward the bearing and retreating, and
by adjusting the position of the position adjustment part, the torque when the shaft is rotated relative to the housing is adjusted.

10. The hinge device according to claim 8, wherein the force imparting section is provided with a rod which is interposed between the position adjustment part and the bearing, and is parallel to the shaft; and
the hinge device further comprises a retaining member for guiding movement of the rod toward the bearing.

11. The hinge device according to claim 6, wherein a housing part for housing the rod arranged between the outside of the shaft and the inside of the bearing in a manner so as to be capable of moving in the circumferential direction of the bearing is provided at the bearing;
an inclined surface approaching the shaft when moving towards one direction in the circumferential direction of the bearing is formed at the housing part of the bearing;
when the shaft is rotated in one direction relative to the housing, the rod moves in the housing part of the bearing in one direction of the circumferential direction;
and when the shaft is rotated in the other direction relative to the housing, the rod moves in the housing part of the bearing in the other direction of the circumferential direction.

12. The hinge device according to claim 11, wherein the torque when the shaft is rotated in one direction relative to the housing is larger than the torque when the shaft is rotated in the other direction relative to the housing.

13. The hinge device according to claim 11, wherein the hinge device further comprises a torque adjustment mechanism for limiting the amount that the rod moves in the housing part of the bearing in the circumferential direction, and adjusting the torque when the shaft is rotated relative to the housing.

14. The hinge device according to claim 11, wherein a recessed part in which the rod enters when the shaft is rotated in the one direction relative to the housing is formed in the shaft.

15. The hinge device according to claim 11, wherein the hinge device further comprises:
an annular member which encircles the shaft and the rod contacting the shaft, and biases the rod to the shaft.

16. The hinge device according to claim 6, wherein a housing part for housing the rod arranged between the outside of the shaft and the inside of the bearing in a manner so as to be capable of moving in the circumferential direction of the bearing is provided at the bearing;
a first inclined surface approaching the shaft toward one direction in the circumferential direction of the bearing from a center part, and a second inclined surface approaching the shaft toward another direction in the circumferential direction of the bearing from the center part are formed at the housing part of the bearing;
when the shaft is rotated in one direction relative to the housing, the rod moves in the housing part of the bearing in one direction of the circumferential direction;
and when the shaft is rotated in the other direction relative to the housing, the rod moves in the housing part of the bearing in the other direction of the circumferential direction.

17. The hinge device according to claim 16, wherein a holding torque when the shaft is stopped in relation to the housing is larger than a torque when the shaft is rotated in one direction relative to the housing and a torque when the shaft is rotated in the other direction relative to the housing.

18. The hinge device according to claim 16, wherein the hinge device further comprises:
an annual member which encircles the shaft and the rod contacting the shaft, and biases the rod to the shaft.

19. The hinge device according to claim 6, wherein a housing part for housing the rod arranged between the outside of the bearing and the inside of the housing in a manner so as to be capable of moving in the circumferential direction of the housing is provided at the housing;
a first inclined surface approaching the bearing toward one direction in the circumferential direction of the housing from a center part, and a second inclined surface approaching the bearing toward another direction in the circumferential direction of the housing from the center part are formed at the housing part of the housing;
when the shaft is rotated in one direction relative to the housing, the bearing rotates together with the shaft in one direction until a prescribed angle is reached, and the rod moves in the housing part of the housing in one direction of the circumferential direction;
and when the shaft is rotated in the other direction relative to the housing, the bearing rotates together with the shaft in the other direction until a prescribed angle is reached, and the rod moves in the housing part of the bearing in the other direction of the circumferential direction.

20. The hinge device according to claim 19, wherein a holding torque when the shaft is stopped in relation to the housing is larger than a torque when the shaft is rotated in one direction relative to the housing and a torque when the shaft is rotated in the other direction relative to the housing.

21. The hinge device according to claim 4, wherein the bearing comprises a plurality of contact sections and a plurality of non-contact sections;
a plurality of force imparting sections are provided corresponding to the plurality of non-contact sections; and
each of the plurality of force imparting sections presses each of the plurality of non-contact sections.
